**Europäisches Patentamt**

**European Patent Office**

**Office européen des brevets**

(11) Veröffentlichungsnummer: **0 320 695**
A1

## (12) EUROPÄISCHE PATENTANMELDUNG

(21) Anmeldenummer: 88119915.2

(22) Anmeldetag: 29.11.88

(51) Int. Cl.⁴: **G01S 7/52** , **G01S 15/93**

(30) Priorität: 11.12.87 DE 3742137

(43) Veröffentlichungstag der Anmeldung:
21.06.89 Patentblatt 89/25

(84) Benannte Vertragsstaaten:
**AT CH DE FR GB IT LI SE**

(71) Anmelder: **Siemens Aktiengesellschaft Berlin
und München**
**Wittelsbacherplatz 2**
**D-8000 München 2(DE)**

(72) Erfinder: **Kölpin, Thomas, Dr.**
**Marienstrasse 1e**
**D-8450 Amberg(DE)**
Erfinder: **Forster, Alfred, Dipl.-Ing.(FH)**
**Nariskerstrasse 3**
**D-8460 Schwandorf(DE)**

(54) **Einrichtung zur berührungslosen Abstandsmessung.**

(57) Eine Einrichtung zur berührungslosen Abstandsmessung bei der die Abklingzeit der Wandleramplitude durch Veränderung der Sendefrequenz des
Wandlers (1) variiert, wird. Die für den Abklingvorgang maßgebende Dämpfung hängt von der Sendefrequenz ab. Hierzu dient eine Schaltung, die aus
einem elektroakustischen Wandler (1), einem Generator (2), einem Empfangsverstärker (5) und einer
Steuerschaltung (6) besteht. Abhängig von der Objektentfernung vom Wandler (1) erzeugt der Generator (2) für eine bestimmte Sendezeit eine Schwingung mit konstanter Sendefrequenz und konstanter
Amplitude. Dabei wird für die Erfassung eines Objekts im Nahbereich eine solche Sendefrequenz gewählt, bei der die Wandleramplitude so schnell abklingt, daß das Echosignal ungestört empfangen und
ausgewertet werden kann. Anwendung insbesondere
bei Kraftfahrzeugen.

FIG 1

Xerox Copy Centre

## Einrichtung zur berührungslosen Abstandsmessung

Die Erfindung bezieht sich auf eine Einrichtung zur berührungslosen Abstandsmessung, insbesondere für Kraftfahrzeuge, mit mindestens einem elektroakustischen Wandler zum Aussenden eines Ultraschallsignals und anschließenden Empfangen des von einem Objekt reflektierten Ultraschallsignals, mit einem elektrischen Generator zur Aktivierung des Wandlers, mit einer Empfangsstufe für die vom Wandler erfaßten Echosignale und mit einem Steuergerät, das eine Sendezeit, in der der Wandler vom Generator aktiviert wird, eine daran anschließende Abklingzeit des Wandlers, dann ein Hörfenster für reflektierte Echosignale vorgibt.

Einrichtungen zur berührungslosen Abstandsmessung der vorgenannten Art sind aus der DE-OS 35 13 270 bekannt. Hierin wird eine Einrichtung zur Abstandsmessung beschrieben, bei der durch das Steuergerät die Sendezeit und/oder die Sendeleistung des Wandlers variierbar sind. Weiterhin wird dafür gesorgt, daß in einem Zyklus mit kürzerer Sendezeit und/oder mit kleinerer Sendeleistung des Wandlers der zeitliche Abstand des Beginns des Hörfensters vom Beginn der Sendezeit kleiner ist als in einem Zyklus mit einer größeren Sendezeit und/oder mit einer größeren Sendeleistung des Wandlers. Bei einer derartigen Einrichtung wird die Spannungsamplitude am Eingang des Wandlers variiert, was bei gleichbleibendem Dämpfungskoeffizient des Wandlers zur Folge hat, daß sich die Abklingzeit entsprechend ändert. Dies bedeutet aber, daß mit kleinerem Objektabstand das Nutzsignal, durch Senkung der Spannungsamplitude verringert wird.

Weiterhin ist aus der Patentschrift Nr. 430 461 ein Verfahren zur Entfernungsbestimmung mittels reflektierter mechanischer Impulse bekannt. Bei diesem wird ein in seiner Eigenfrequenz von der Eigenfrequenz des zugehörigen Empfängers abweichender Sender bei der Erzeugung des Sendeimpulses durch eine in ihrer Frequenz mit der Eigenfrequenz des Empfängers übereinstimmende periodische Kraft zu erzwungenen Schwingungen erregt. Nach Aufhören der Energiezufuhr klingt der Sender in seiner von der Betriebs- und Empfängerfrequenz abweichenden Eigenfrequenz frei ab. Somit wird ein Schaltimpuls bestimmter Frequenz und Dauer erzeugt.

Der Erfindung liegt die Aufgabe zugrunde, eine Einrichtung zur berührungslosen Abstandsmessung zu schaffen, bei der die Abklingzeit des Wandlers variierbar ist und damit zur Objekterfassung des Näherungsschalters auch im Nahbereich geeignet ist. Diese Aufgabe wird erfindungsgemäß dadurch gelöst, daß der Wandler von dem Generator durch eine vom Steuergerät auswählbare Sendefrequenz angeregt ist und daß die Sendefrequenz des Wandlers bei kleiner Objektentfernung im Vergleich zu der bei größerem Abstand derart gewählt ist, daß die zugehörige Abklingzeit der Wandlerschwingung kürzer ist.

In vorteilhafter Weise wird hierbei ausgenutzt, daß der Dämpfungskoeffizient der Wandlerschwingung von der Schwingfrequenz abhängt. Durch entsprechende Wahl der Sendefrequenz wird erreicht, daß die Abklingzeit des Wandlers in gewünschter Weise bei kurzer Objektentfernung kleiner ist als bei größerer Objektentfernung. Besteht der Generator aus einem steuerbaren Oszillator und einem Sendeverstärker, so wird hierdurch eine Anregung des Wandlers unabhängig von der Sendefrequenz mit konstanter Spannungsamplitude ermöglicht. Indem beim Übergang zu kleinerer Objektentfernung die Sendefrequenz oberhalb der Resonanzfrequenz des Wandlers erhöht wird, wird in vorteilhafter Weise der Einfluß der Frequenz auf die Abklingzeit ausgenutzt; denn ein höherfrequent schwingender Wandler hat bei konstantem Dämpfungswiderstand eine kleinere Abklingzeit als für niederige Frequenzen.

In der Zeichnung ist ein Ausführungsbeispiel der Erfindung dargestellt, das im folgenden näher beschrieben ist.

Es zeigen:

FIG 1 einen Schaltungsteil für eine Einrichtung zur berührungslosen Abstandsmessung,

FIG 2 ein Diagramm mit dem Abklingverhalten der Amplitude eines Wandlers.

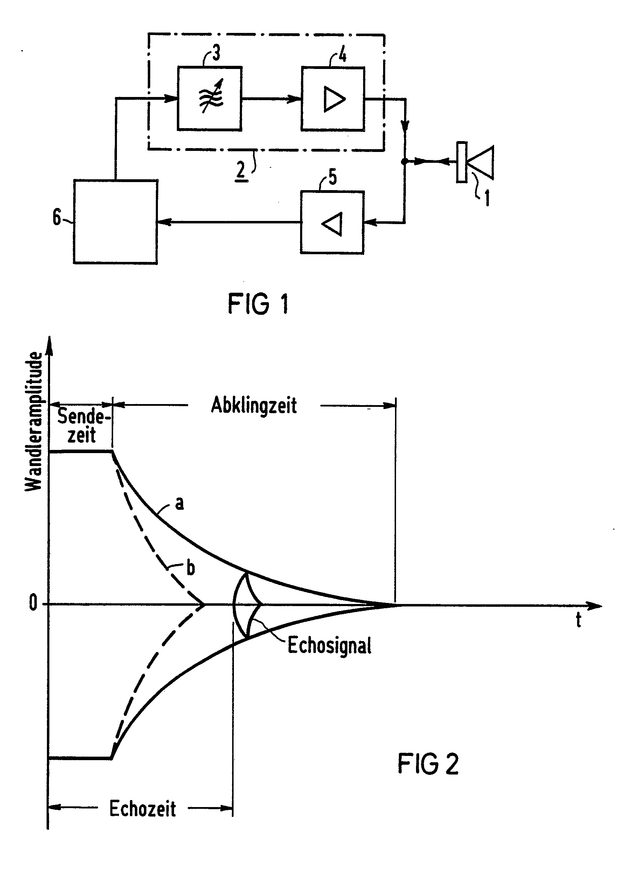

Die in FIG 1 dargestellte Schaltung für eine Einrichtung zur berührungslosen Abstandsmessung besteht aus einem elektroakustischen Wandler 1, einem Generator 2, einem Empfangsverstärker 5 und einem Steuergerät 6. Ausgehend von einem Steuersignal, das der aus einem Oszillator 3 und einem Sendeverstärker 4 bestehende Generator 2 von dem Steuergerät 6 erhält, regt der Generator 2 den Wandler 1 für eine bestimmte konstante Sendezeit mit einer Schwingung mit konstanter Sendefrequenz und konstanter Spannungsamplitude an. Die Sendefrequenz wird hierbei durch das Steuersignal des Steuergerätes 6 an den Generator 2 vorgegeben. Während der Sendezeit wird der Wandler 1 durch die Schwingung des Generators 2 angeregt. Dieser schließt sich eine Abklingzeit an, in der der Wandler 1 frei schwingt und in der seine Schwingamplitude abhängig von dem gerade wirksamen Dämpfungskoeffizienten entsprechend schnell abklingt. Während der Echozeit, die der Abklingzeit folgt, erwartet der Wandler 1 das vom Objekt reflektierte Ultraschallsignal. Liegt dieses am Wandler 1 an, so wird es zur Verstärkung an den Empfangsverstärker 4 weitergeleitet und von dort dem Steuergerät 6 zugeführt. Aus dem Zeitabstand zwischen Sendung des Ultraschallsignals und Empfang des Echosignals bestimmt das Steuergerät 6 mit seiner Auswerteschaltung die Entfernung zum Objekt.

Durch Variation der vom Steuergerät 6 vorgegebenen Sendefrequenz und der damit verbundenen Änderung der Abklingzeit kann z.B. in Abhängigkeit der Objekterfassung der Beginn des Hörfensters, in dem das Echosignal empfangen wird, verschoben werden. Dies wird für den Fall ausgenutzt, daß bei der Messung der Objektentfernung im Hörfenster kein Echosignal empfangen wird, z.B. dann, wenn die Abklingzeit aufgrund der gewählten Sendefrequenz lang ist und dadurch der Wandler 1 das von einem nahen Objekt reflektierte Echosignal während des Abklingens der Wandleramplitude empfängt (siehe FIG 2). In diesem Fall ist die Sendefrequenz so zu ändern, daß die Abklingzeit verkürzt wird und somit das Hörfenster früher beginnt.

In FIG 2 ist ein Abklingverlauf mit der Einhüllenden a der Wandleramplitude dargestellt, bei dem die Echozeit kleiner ist als die Summe aus der Sende- und der Abklingzeit. Demzufolge wird das Echosignal von der abklingenden Wandleramplitude überdeckt und kann nicht ausgewertet werden. Beim Abklingverlauf mit der Einhüllenden b ist dagegen durch Änderung der Sendefrequenz und dem damit verbundenen höheren Dämpfungskoeffizienten die Abklingzeit soweit verkürzt, daß das Echosignal unverfälscht empfangen und ausgewertet werden kann.

## Ansprüche

1. Einrichtung zur berührungslosen Abstandsmessung, insbesondere für Kraftfahrzeuge, mit mindestens einem elektroakustischen Wandler (1) zum Aussenden eines Ultraschallsignals und anschließendem Empfangen eines von einem Objekt reflektierten Ultraschallsignals, mit einem elektrischen Generator (2) zur Aktivierung des Wandlers (1), mit einer Empfangsstufe (5) für die vom Wandler (1) erfaßten Echosignale und mit einem Steuergerät (6), das eine Sendezeit, in der der Wandler (1) vom Generator (2) aktiviert wird, eine daran anschließende Abklingzeit des Wandlers (1), dann ein Hörfenster für reflektierte Echosignale vorgibt, **dadurch gekennzeichnet,** daß der Wandler (1) von dem Generator (2) durch eine vom Steuergerät (6) auswählbare Sendefrequenz angeregt ist und daß die Sendefrequenz bei kleiner Objektentfernung im Vergleich zu der bei größerem Abstand derart gewählt ist, daß die zugehörige Abklingzeit der Wandlerschwingung (1) kürzer ist.

2. Einrichtung zur berührungslosen Abstandsmessung nach Anspruch 1, **dadurch gekennzeichnet,** daß der Generator aus einem steuerbaren Oszillator (3) und einem Sendeverstärker (4) besteht.

3. Einrichtung zur berührungslosen Abstandsmessung nach einem der Ansprüche 1 oder 2, **dadurch gekennzeichnet,** daß beim Übergang zur kleineren Objektentfernung die Sendefrequenz oberhalb der Resonanzfrequenz des Wandlers (1) erhöht wird.

FIG 1

FIG 2

| | | Europäisches Patentamt | EUROPÄISCHER RECHERCHENBERICHT | Nummer der Anmeldung |
|---|---|---|---|---|

EP 88 11 9915

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A- 430 461 (SIGNAL GmbH) <br> * Seiten 2-3; Figuren 1-3 * <br> --- | 1-3 | G 01 S 7/52 <br> G 01 S 15/93 |
| A | EP-A-0 152 895 (BMW) <br> * Seite 6, Zeilen 8-22; Seite 5 * <br> --- | 1-3 | |
| D,A | DE-A-3 513 270 (BADER et al.) <br> * Seiten 11-16; Figuren * <br> --- | 1-3 | |
| A | GB-A-2 138 563 (AT & T) <br> * Zusammenfassung; Figur 1 * <br> --- | 1 | |
| A | RADIO FERNSEHEN ELEKTRONIK, Band 29, Nr. 2, 1980, Seiten 74-75, Berlin, DE; E. LOOSE: "Verbesserung des Auflösungsvermögens und der Empfindlichkeit von Ultraschallschwingern" <br> * Insgesamt * <br> --- | 1-3 | |
| A | E.D.N. ELECTRICAL DESIGN NEWS, Band 31, Nr. 7, 3. April 1986, Seiten 206-207, Boston, Ma., US; M. LEE: "Transducer improves ultrasonic ranging" <br> * Insgesamt * <br> ----- | 1 | **RECHERCHIERTE SACHGEBIETE (Int. Cl.4)** <br><br> G 01 S <br> G 10 K |

Der vorliegende Recherchenbericht wurde für alle Patentansprüche erstellt

| Recherchenort | Abschlußdatum der Recherche | Prüfer |
|---|---|---|
| DEN HAAG | 17-03-1989 | DEVINE J.J |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument